# EUROPEAN PATENT APPLICATION

(11) **EP 2 520 836 A1**
(43) Date of publication of application: **07.11.2012**
(21) Application number: 11164889.5
(22) Date of filing: 05.05.2011
(51) Int. Cl.: F16K 17/04, H01F 27/40

(54) **Pressure relief device for a power transformer, and related power transformer**

(71) Applicant: ABB Technology AG, 8050 Zürich (CH)
(72) Inventor: Ramponi, Emanuele, 36071 Arzignano (VI) (IT); Carollo, Carlo, 36030 Zugliano (VI) (IT); Tonin, Andrea, 36070 Brogliano (VI) (IT)
(74) Representative: De Santis, Giovanni

(57) **Abstract**

A pressure relief device (100) suitable to be connected to a power transformer comprising:
a connection flange (1) which is provided with a through opening (2), and is suitable to be connected to a mounting part of a power transformer;
- an end cap (3) which is spaced apart from the connection flange (1);
- a valve element which is displaceable between a first position where it is suitable to at least partially close the through opening (2) and a second position where it is spaced away from the through opening (2);
- at least one elastic element (15) which is operatively connected to the valve element (4) so as to urge it towards the first position; and
- connection means (10) operatively connecting the valve element (4) to at least one of the connection flange (1) and the end cap (3).
The connection means (10) are arranged so as to guide the valve element (4) along a predetermined path when it moves between the first and second positions.

## Description

The present disclosure relates to a pressure relief device suitable to be connected to a power transformer or component thereof, and to a power transformer comprising such a pressure relief device.

It is widely known in the art the use of electrical induction devices, typically power transformers, which exploit the electromagnetic induction for properly transmitting and distributing electricity over power lines.

Most common power transformers generally comprise a magnetic core composed by one or more legs or limbs connected by yokes which together form one or more core windows; for each phase, around the legs there are arranged a number of windings, i.e. low-voltage windings, high-voltage windings, control or regulation windings.

Due to the intrinsic structural characteristics and functioning of these devices, a very important aspect concerns the cooling which must be guaranteed for the various components in order to provide the desired electromagnetic performance without incurring in any malfunctioning or damages; to this end, a power transformer comprises usually a closed tank or vessel which is filled with an insulating fluid, e.g. a mineral oil, used as a coolant for the components of the transformer.

During operations, it is possible that some failures or disturbances may generate tank accidental and uncontrolled increases in pressure inside the closed; for example, sudden and violent short-circuits inside the tank almost instantly generate an enormous amount of gas with a great increase in interior pressures.

When the pressure inside the tank exceeds a redefined limit, there is the danger of severe damages for the transformer and even of explosions.

To mitigate such risks, well known pressure relief devices are used which are designed to discharge the over-pressure outside the tank into the surrounding atmosphere.

Known pressure relief devices are usually connected to a wall of the transformer tank, e.g. on top of the tank, and are available in numerous and various constructive solutions.

Examples of such known devices are described in patent documents US 4,676,266, US 7552,744, EP 1235013.

Although known pressure relief devices perform their basic functions in a quite satisfying way, there is still desire and room for further improvements, in particular as regard to their reliability and repeatability of interventions.

Such a desire is fulfilled by a pressure relief device suitable to be connected to a power transformer, comprising:
- a connection flange provided with a through opening, said connection flange being suitable to be connected to a part of said power transformer;
- an end cap which is spaced apart from said connection flange;
- a valve element which is displaceable between a first position where it is suitable to at least partially close said through opening and a second position where it is spaced away from said through opening;
- at least one elastic element which is operatively connected to said valve element so as to urge it towards the first position; characterized in that it further comprises connection means operatively connecting said valve element to at least one of said connection flange and said end cap, wherein said connection means are arranged so as to guide said valve element along a predetermined path when it moves between said first and second positions.

Detailed characteristics and advantages will become apparent from the description of some preferred but not exclusive embodiments of a pressure relief devoice according to the present disclosure, illustrated only by way of non-limitative examples with the accompanying drawings, wherein:
figure 1 is a perspective view illustrating an exemplary embodiment of the pressure relief device according to the present disclosure, in a first closed position;
figure 2 shows the pressure relief device of figure 1 partially cut and schematically connected to a tank of a power transformer;
figure 3 is a perspective view showing one exemplary embodiment of some components usable in a pressure relief device according to the present disclosure;
figure 4 is an enlarged perspective view of portion A of figure 3;
figure 5 is a schematic view showing another exemplary embodiment of a valve element usable in the pressure relief device according to the present disclosure.

It should be noted that in the detailed description that follows, identical or similar components have the same reference numerals, regardless of whether they are shown in different embodiments of the present disclosure. It should also be noted that in order to clearly and concisely disclose the present disclosure, the drawings may not necessarily be to scale and certain features of the present disclosure may be shown in somewhat schematic form.

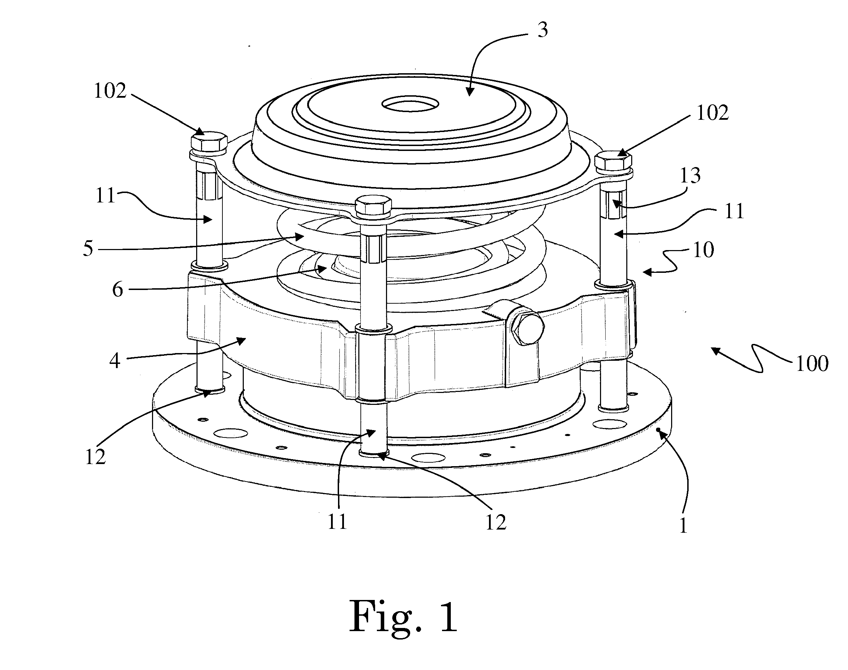

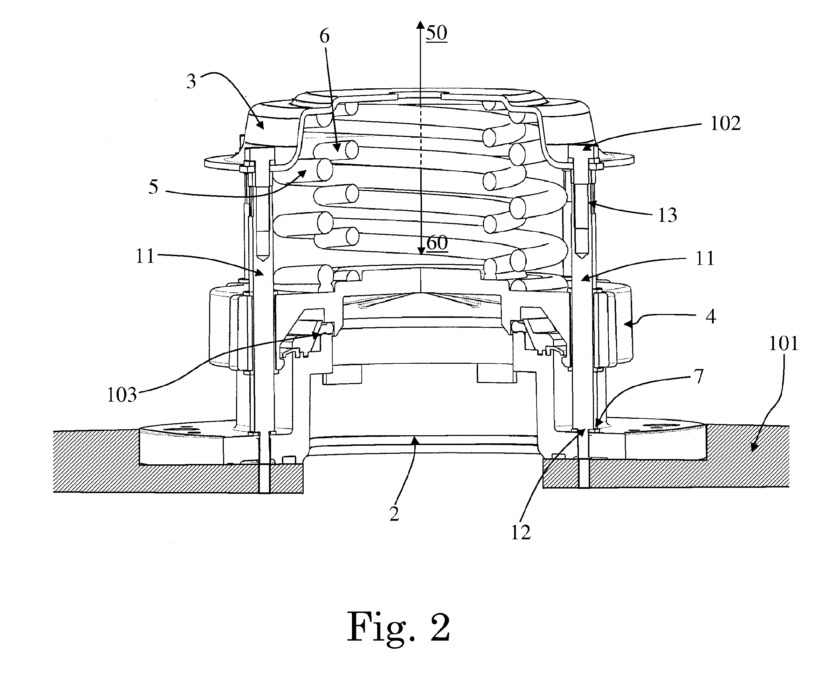

Figure 1 shows an exemplary embodiment of a pressure relief device according to the present disclosure globally indicated by the reference number 100; the pressure relief device 100 is suitable to be connected to a power transformer, for example to the tank or casing of the transformer, as shown schematically in figure 2 wherein a top wall of a tank is schematically represented by the reference number 101.

Clearly, the pressure relief device 100 can be connected to any other suitable part or wall of the transformer or to any other component thereof, such as for example an on-load tap changer.

In the exemplary embodiment illustrated in figures 1 and 2, the pressure relief device 100 comprises a connection flange 1 provided with a through opening 2; the connection flange 1 is suitable to be connected to the tank, e.g. to the top wall 101 of the tank, by means of securing means e.g. screws and/or studs 102, as schematically illustrated for instance in figure 2 and in the way that will be described in more details hereinafter.

The exemplary pressure relief device 100 comprises an end or abutment cap 3 which is spaced apart from the connection flange 1. e.g. above the connection flange 1 and externally with respect to the tank of the transformer; in the exemplary embodiment illustrated, the end cap 3 has a substantially circular, cup-shaped configuration.

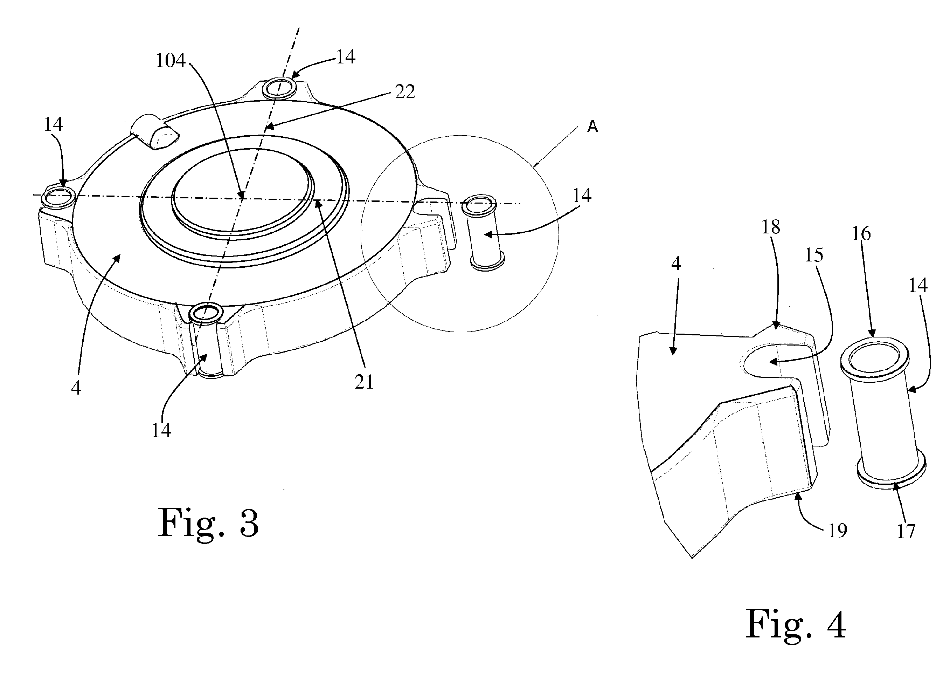

The pressure relief device 100 comprises a valve element 4 which comprises, as for example illustrated in figures 2 and 3, a substantially disk-like body (seen in top or plan view) and is positioned between the connection flange 1 and the end cap 3; the valve element 4 is displaceable between a first position where it is suitable to at least partially close the through opening 2 (closed position illustrated in figure 1) and a second position where it is spaced away from the through opening 2 (open position) so as to allow venting outside the tank of any dangerous overpressure occurring for whatever reason inside the tank itself.

Further, the pressure relief device 100 comprises at least one elastic element 5, e.g. a spring 5, which is operatively connected to the valve element 4 so as to urge it towards the first open position where it is devised to close at least partially the through opening 2 of the connection flange 1; to this end, in order to sealingly close the through opening 2, the device 100 is provided with suitable gaskets 103 according to solutions well known to those skilled in the art and therefore not described herein in details.

In the exemplary embodiment illustrated in figures 1 and 2, the pressure relief device 100 is shown provided with two elastic elements, i.e. two springs 5 and 6, e.g. two compression springs, which are for instance positioned concentrically to each other; each spring 5, 6, has one end which is operatively connected to the end cap 3 and is placed within the concavity of its cup-shaped body, and the other end which is operatively connected to the valve element 4 so as to urge it towards the connection flange 1 for closing its though opening 2. Advantageously, the pressure relief device 100 according to the present disclosure comprises connection means, indicated by the overall reference number 10, which operatively connect the valve element 4 to at least one of the connection flange 1 and the end cap 3, wherein such connection means 10 are arranged so as to guide the valve element 4 along a predetermined path when the valve element 4 itself moves between the first closed position and the second position, in both directions.

The valve element 4 can be connected to the connection flange 1 and/or the end cap 3 directly, i.e. by means of only the connection means 10 themselves, or indirectly through the use/interposition of other components.

In particular, in the exemplary embodiments illustrated in the attached figures, the connection means 10 comprise first connection means which mechanically connect the connection flange 1 with the end cap 3 and second connection means operatively connecting the valve element 4 with the first connection means, in the way that will be described hereinafter.

According to this exemplary embodiment, the valve element 4 is operatively connected to both the connection flange 1 and the end cap 3 and is guided along its travelling path with respect to both these two components 1 and 3.

In the exemplary embodiment illustrated, the first connection means 10 comprise a plurality of substantially rectilinear studs 11, for instance four studs 11; each stud 11 has one end portion 12 which is inserted into a corresponding hole 7 provided on the connection flange 1 and is connected to the flange 1 by means of securing means, e.g. a fixing screw 102 which secures also the connection of the flange 1 with the wall 101. A second end portion 13 of each stud 11 is connected to the end cap 3, by means of other securing means, e.g. a further screw 102.

According to the exemplary embodiment illustrated in figures 1-4, the second connection means comprise for instance a plurality of sleeves 14 and a plurality of seats 15 which are provided on the body of the valve element 4; in particular, as illustrated in more details in figures 3-4, the seats 15 are placed at the outer rim of the disk-like body of the valve element 4 and are open outwardly; in practice they protrude outwardly from the circumference of the disk-like body.

According to the exemplary embodiment illustrated in figures 1 and 3, the plurality of seats 15 comprises four seats 15, namely a first seat and a second seat which are positioned substantially symmetrically to each other with respect to the center 104 of the disk-like body, and a third seat and a fourth seat which are also positioned substantially symmetrically to each other with respect to the center 104 of said disk-like body. In practice the four seats 15 are placed at the ends of two perpendicular diameters 21, 22 of the disk-like body of the valve element 4, according to a solution which allows a substantially symmetric distribution of mechanical stresses.

Each seat 15 is adapted to receive a corresponding sleeve 14 which is inserted therein with a mechanical clearance; alternatively the sleeves 14 could be force-fitted into the respective seats 15.

In the exemplary embodiment illustrated in figure 3, each sleeve 14 of the plurality of sleeves 14 comprises a central portion and two end portions 16, 17 which protrude transversely from the central portion. Each sleeve 14 and the correspondingly associated seat 15 are sized relatively to each other so as when a sleeve 14 is fitted into the corresponding seat 15, the two end portions 16-17 rest and abut each on a corresponding surface 18, 19 of the valve element 4, respectively. In this way, the sleeves 14 and the valve element 4 are rigidly connected to each other and substantially move together as a unique body.

In turn, as illustrated in figures 2-3, each stud 11 is inserted and passes through an associated sleeve 14; in particular, each stud 11 is inserted into the associated sleeve 14 with a small mechanical clearance left there between so as to allow the movement of the valve element 4 relative to the studs 11 themselves (and hence relative to the end cap 3 and connection flange 1 as well which are rigidly connected with the studs 11).

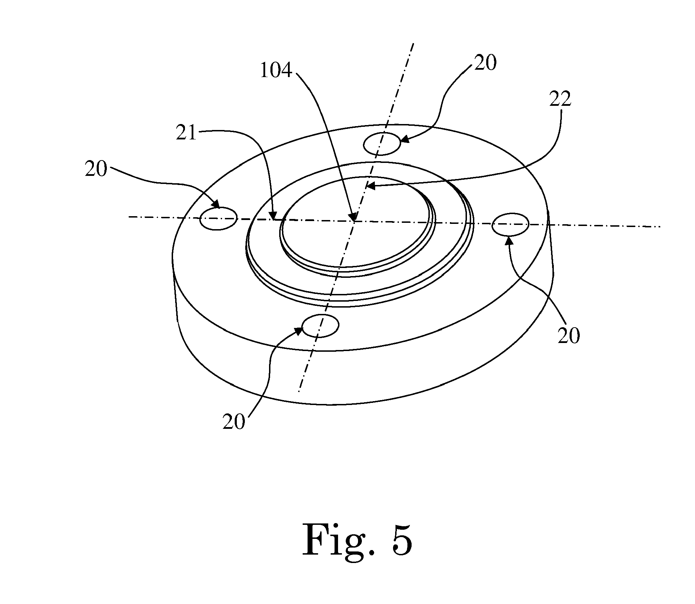

According to another exemplary embodiment illustrated schematically in figure 5, the connection means can comprise a plurality of through holes 20 provided on the body of the valve element 4; in this case the sleeves 15 can be omitted and each stud 11 of the plurality of studs 11 can be inserted and passed through an associated through hole 20 of the plurality of through holes 20.

Also in this case, each stud 11 is inserted into the corresponding through hole 20 with a small mechanical clearance there between, so as to allow the movement of the valve element 4 relative to the studs 11 and therefore relative the end cap 3 and connection flange 1 as well. Also in this exemplary embodiment illustrated in figure 5, the plurality of through holes 20 comprises four through holes 20, namely a first hole and a second hole which are positioned substantially symmetrically to each other with respect to the center 104 of the disk-like body, and a third through hole and a fourth through hole which are also positioned substantially symmetrically to each other with respect to the center 104 of said disk-like body. In practice the four through holes 20, likewise the four seats 15, are placed at or close to the ends of two perpendicular diameters 21, 22 of the disk-like body of the valve element 4.

In practice, in normal operating conditions, the valve element 4 is urged by the springs 5, 6 toward the connection flange 1 and closes the through opening 2 (figure 1).

If for whatever reason the pressure inside the tank increases and reaches a level sufficient enough to overcome the urging force of the springs 5-6, the valve element 4 is moved away by such overpressure towards the end cap 3 (see arrow 50 in figure 2); during this displacement, the movement of the valve element 4 is guided by the coupling studs 11-sleeves 14 along a predetermined and always the same path, i.e. in the exemplary embodiment illustrated along a rectilinear path (directed as the arrow 50). In this way, when the through opening 2 is open, fluids coming from the inside of the tank, e.g. gases or even quantities of the coolant liquid are vented/discharged outside; as a consequence, the pressure inside the tank is lowered and when the force exerted by the springs 5, 6 (which were compressed by the movement of the valve element 4 towards the end cap 3) on the valve element 4 is again higher than the counteracting pressure, the valve element 4 returns to the previous position along the same predetermined substantially rectilinear path (see arrow 60 in figure), thus closing again the through opening 2.

In practice, it has been found that the pressure relief device 100 according to the present disclosure offers a solution which is rather simple, reliable, and whose interventions are repeatable since displacements of the valve element are precisely guided and always along the same path or trajectory. Such results are achieved thanks to a simple solution which makes the pressure relief device 100 according to the present disclosure easy to be used in connection with any type of power transformer, or even components of or for power transformers, such as on-load tap changers, where such safety devices are advisable.

Hence, the present disclosure also encompasses a power transformer comprising at least one pressure relief device 100 of the types previously described and as defined in the appended claims. Clearly more than one pressure relief device can be used in a single power transformer.

The pressure relief device 100 thus conceived is susceptible of modifications and variations, all of which are within the scope of the inventive concept as defined in particular by the appended claims; any possible combination of the previously disclosed embodiments can be implemented and has to be considered within the inventive concept of the present disclosure; all the details may furthermore be replaced with technically equivalent elements. For example, any of the previously described components may be differently shaped, or used in a different number or parts or elements, or the components previously described can be differently connected with respect to each other.

For instance, a different number of studs 11 and/or sleeves 14, and/or seat 15 can be used; and/or such components can be differently shaped or differently positioned; the same applies to the valve element 4, and/or the connection flange 1, and/or the end cap 3 which may have a different shape or can be differently connected; for example, the studs 11 or equivalent means can connect directly the end cap 3 to the wall of the tank with the valve element 4 moving along them, while the connection flange 1 can be connected to the wall of the tank through other connection means. The elastic means can be constituted by a different number and/or type of springs, or even by other elastic means having similar properties, such as for example suitable metallic blades; et cetera. Also the materials used, so long as they are compatible with the specific use and purpose, as well as the dimensions, may be any according to the requirements and the state of the art.

## Claims

1. A pressure relief device (100) suitable to be connected to a power transformer, comprising:
- a connection flange (1) provided with a through opening (2), said connection flange being suitable to be connected to a part of said power transformer;
- an end cap (3) which is spaced apart from said connection flange (1);
- a valve element (4) which is displaceable between a first position where it is suitable to at least partially close said through opening (2) and a second position where it is spaced away from said through opening (2);
- at least one elastic element (5) which is operatively connected to said valve element (4) so as to urge it towards the first position;
**characterized in that** it further comprises connection means (10) operatively connecting said valve element (4) to at least one of said connection flange (1) and said end cap (3), wherein said connection means (10) are arranged so as to guide said valve element (4) along a predetermined path when it moves between said first and second positions.

2. Pressure relief device (100) according to claim 1, wherein said connection means (10) comprise first connection means which mechanically connect said connection flange (1) with said end cap (3).

3. Pressure relief device (100) according to one or more of claims 1-2, wherein said connection means comprise second connection means operatively connecting said valve element (4) with said first connection means.

4. Pressure relief device (100) according to one or more of the preceding claims, wherein said first connection means (10) comprise a plurality of studs (11), each stud (11) having its end portions (12, 13) connected to said connection flange (1) and said end cap (3), respectively.

5. Pressure relief device (100) according to claim 4, wherein said second connection means comprise a plurality of sleeves (14), each stud (11) of said plurality of studs (11) being inserted and passing through an associated sleeve (14) of said plurality of sleeves (14).

6. Pressure relief device (100) according to claim 5, wherein each stud (11) is inserted into the associated sleeve (14) with mechanical clearance there between.

7. Pressure relief device (100) according to one or more of the preceding claims, wherein said valve element (4) comprises a plurality of seats (15) receiving each a corresponding sleeve (14).

8. Pressure relief device (100) according to claim 7, the seats (15) of said plurality of seats (15) are placed at the outer rim of said valve element (4) and are open outwardly.

9. Pressure relief device (100) according to one or more of the preceding claims, wherein each sleeve (14) of said plurality of sleeves (14) comprises a central portion and two end portions (16, 17) protruding transversely from said central portion and abutting each on a corresponding surface of said valve element (4).

10. Pressure relief device (100) according to one or more of the preceding claims, wherein said valve element (4) comprises a disk-like body, and wherein said plurality of seats (15) comprises a first seat and a second seat positioned substantially symmetrically to each other with respect to the center of said disk-like body, and a third seat and a fourth seat positioned substantially symmetrically to each other with respect to the center of said disk-like body.

11. Pressure relief device (100) according to claim 4, wherein said second connection means comprise a plurality of through holes (20) provided on the body of said valve element (4), each stud (11) of said plurality of studs (11) being inserted and passing through an associated through hole (20).

12. A power transformer **characterized in that** it comprises at least one pressure relief device (100) according to one or more of the previous claims.
